# FASCICULE DE BREVET EUROPEEN

(11) **EP 3 016 172 B1**
(45) Date de publication et mention de la délivrance du brevet: **12.06.2019**
(21) Numéro de dépôt: 15192255.6
(22) Date de dépôt: 30.10.2015
(51) Int. Cl.: H01M 2/06, H01M 2/30, H01M 2/00

(54) **DISPOSITIF D'ALIMENTATION ÉLECTRIQUE PORTABLE**
TRAGBARE VORRICHTUNG ZUR ELEKTRISCHEN STROMVERSORGUNG
PORTABLE POWER-SUPPLY DEVICE

(30) Priorité: 03.11.2014 FR 1460590
(43) Date de publication de la demande: 04.05.2016
(73) Titulaire: Ingenico Group, 75015 Paris (FR)
(72) Inventeur: ANDRE, Jérôme, 26800 MONTOISON (FR); DEMANGE, Fabien, 07130 SAINT-PERAY (FR); BERTHIAUD, Olivier, 07130 CORNAS (FR)
(74) Mandataire: Vidon Brevets & Stratégie

(56) Documents cités:
- CH-A2- 707 313
- US-A- 5 470 255
- US-A- 5 739 666
- US-A1- 2002 064 973
- US-B1- 6 529 714
- ANONYMOUS: "MAKE A USB CHARGER FROM A 9 VOLT BATTERY", Technology Pod , 29 avril 2012 (2012-04-29), XP002754768, Extrait de l'Internet: URL:http://web.archive.org/web/20120429002 053/http://www.techypod.com/2009/11/make-u sb-charger-from-9volt-battry.html
- KONRAD SCHNEID: "TEST ACER ASPIRE ONE D270-26Dbb NOTEBOOK", NOTEBOOKCHECK , 15 avril 2012 (2012-04-15), XP002754799, Extrait de l'Internet: URL:http://www.notebookcheck.com/Test-Acer -Aspire-One-D270-26Dbb-Netbook.72379.0.htm l

## Description

### 1. Domaine

Le domaine de la divulgation est celui de l'alimentation électrique autonome pour appareil électronique. Plus précisément, la divulgation concerne un dispositif d'alimentation électrique portable et sa méthode de d'insertion et de retrait d'un appareil électronique tel qu'un terminal de paiement.

### 2. Art antérieur

Certains appareils électroniques de l'art antérieur, et notamment les terminaux de paiement, comprennent un dispositif d'alimentation électrique portable comprenant une batterie reliée à des câbles, eux-mêmes reliés à des contacts électriques situés dans les orifices d'un connecteur, dit connecteur femelle.

Ce connecteur femelle du dispositif d'alimentation électrique portable doit être enfiché dans un connecteur mâle d'alimentation lié à la carte mère de l'appareil électronique afin que la batterie puisse fournir l'énergie nécessaire au fonctionnement de l'appareil électronique.

Cependant, l'enfichage (l'insertion) du connecteur femelle des ensembles de batterie existants dans le connecteur mâle d'alimentation présente certains inconvénients.

D'une part, la manipulation du connecteur femelle et son insertion dans le connecteur d'alimentation mâle s'effectuent dans de petits espaces à l'intérieur de l'appareil électronique, ce qui nécessite une certaine dextérité et, éventuellement, de petits doigts.

D'autre part, le dispositif d'alimentation électrique portable doit être correctement conformé afin de permettre l'insertion de la batterie dans un logement de réception dédié, souvent de taille réduite, ainsi que l'insertion des connecteurs d'alimentation mâle et femelle. Notamment, les câbles doivent être correctement positionnés avant l'insertion de la batterie dans son logement de réception.

Enfin, le dispositif d'alimentation électrique portable requiert généralement l'utilisation des deux mains de l'utilisateur, une première main servant à tenir la batterie et à l'insérer dans son logement de réception, et la deuxième main servant à positionner les câbles et enficher le connecteur femelle dans le connecteur d'alimentation mâle de l'appareil électronique.

Les solutions de l'art antérieur peuvent donc poser problème dans la mesure où les appareils électroniques, et notamment les terminaux de paiement, sont des dispositifs fragiles pour lesquels une mauvaise insertion ou connexion du dispositif d'alimentation électrique portable peut créer des dégâts au niveau du connecteur d'alimentation mâle qui est relié à la carte mère.

Les dommages occasionnés par de mauvaises manipulations du dispositif d'alimentation électrique portable sont ainsi potentiellement dangereux pour le fonctionnement de l'appareil électronique ainsi que pour la santé de l'utilisateur.

Par ailleurs, un appareil électronique tel qu'un terminal de paiement peut comprendre des dispositifs de sécurité mettant en défaut l'appareil électronique lors d'une mauvaise insertion ou connexion du dispositif d'alimentation électrique portable au connecteur d'alimentation de l'appareil. Document US 5 470 255 décrit un connecteur pour une batterie.

Il existe donc un besoin d'un dispositif d'alimentation électrique portable pour appareil électronique, et notamment pour terminal de paiement électronique, ne présentant pas les inconvénients de l'art antérieur énoncés ci-dessus.

### 3. Résumé

L'objet de la présente divulgation ne comprend pas au moins certains des inconvénients de l'art antérieur. L'objet de la présente technique répond à ces besoins en proposant un dispositif d'alimentation électrique portable comprenant une batterie reliée à au moins deux câbles, eux-mêmes reliés à au moins deux contacts électriques situés dans un connecteur, dit connecteur femelle.

Les caractéristiques techniques de l'objet de la présente invention sont décrites dans les libellés des revendications indépendantes 1, 7 et 8. D'autres caractéristiques techniques de l'invention sont décrites dans les libellés des revendications 2 à 6. Selon la technique proposée, un tel dispositif d'alimentation électrique portable comprend en outre un capot solidarisé à la batterie et liant rigidement le connecteur femelle à la batterie.

Ainsi, la technique proposée repose sur une approche nouvelle et inventive de la conception d'un dispositif d'alimentation électrique portable.

En effet, à l'inverse des techniques de l'art antérieur, la batterie et le connecteur d'un tel dispositif d'alimentation électrique portable sont solidaires l'un de l'autre, de sorte qu'il est désormais possible de manipuler le dispositif d'alimentation électrique portable comme un seul bloc indéformable. Ainsi, il existe une correspondance entre la position et l'orientation de la batterie et celles du connecteur femelle.

Selon une caractéristique particulière, un tel capot comprend une première partie de forme sensiblement complémentaire à la forme de la batterie, et une deuxième partie de forme sensiblement complémentaire à la forme du connecteur femelle.

L'utilisation de formes complémentaires aux éléments constituant le dispositif d'alimentation électrique portable permet de minimiser le volume du capot et donc du dispositif d'alimentation électrique portable.

Cela permet également d'assurer la rétrocompatibilité du dispositif d'alimentation électrique portable avec les appareils électroniques existants, et notamment des terminaux de paiement. En effet, la complémentarité des formes permet d'éviter les interférences entre les composants internes des appareils électroniques existants et le dispositif d'alimentation électrique selon la technique proposée.

Selon un mode de réalisation particulier, le capot comprend une troisième partie définissant un logement de réception pour le maintien des câbles.

Ainsi, les câbles peuvent être rangés dans le capot, dans un compartiment prévu à cet effet, de façon à ce que leur présence ne gêne pas la manipulation du dispositif d'alimentation électrique portable lors de la connexion du dispositif d'alimentation électrique portable à un appareil électronique tel qu'un terminal de paiement. De plus, un tel logement de réception contribue à la minimisation du volume du dispositif d'alimentation électrique portable.

Selon une caractéristique particulière, la première partie du capot recouvre partiellement la batterie.

Cela permet de minimiser le volume du capot et donc du dispositif d'alimentation électrique portable.

Par ailleurs, cela aide à assurer la rétrocompatibilité d'un tel dispositif d'alimentation électrique portable avec les logements de réception pour batterie des appareils électroniques existants, et notamment des terminaux de paiement. En effet, la partie non-recouverte de la batterie pourra alors être insérée sans difficulté dans les logements de réception usuels des appareils électroniques existants.

Selon une caractéristique particulière, les câbles et le connecteur femelle sont sensiblement tangents à une surface de la batterie.

Une telle disposition permet de minimiser le volume du dispositif d'alimentation électrique portable selon la technique proposée. Cela permet également de positionner correctement les câbles et le connecteur par rapport à la batterie afin de pouvoir leur apposer un capot servant à améliorer la cinématique de connexion et de déconnexion du dispositif d'alimentation électrique portable.

Selon une caractéristique particulière, la batterie est un solide de révolution, et les orifices du connecteur femelle s'étendent sensiblement perpendiculairement à l'axe de révolution de la batterie.

Une telle disposition permet d'améliorer la cinétique de connexion et de déconnexion du dispositif d'alimentation électrique portable à un appareil électronique existant tel qu'un terminal de paiement. En effet, les logements de réception pour batterie des appareils électroniques existants, tels que des terminaux de paiement, consistent généralement en un compartiment ouvert de forme complémentaire à celle de la batterie. Ils possèdent donc également un axe de révolution. Dans le cas d'un solide de révolution tel qu'un cylindre, les fiches de connexion d'un connecteur d'alimentation mâle d'un appareil électronique sont généralement orientées sensiblement perpendiculairement à l'axe de révolution du logement de réception pour batterie. Les fiches de connexion sont donc également orientées perpendiculairement à l'axe de révolution de la batterie lorsqu'elle est insérée dans le logement de réception pour batterie. Une telle orientation du connecteur femelle et de ses orifices permet donc, une fois la batterie insérée dans son logement de réception, d'effectuer une rotation de la batterie autour de son axe de révolution de façon à enficher (insérer) ou désenficher (retirer, déconnecter) le connecteur femelle du connecteur d'alimentation mâle.

Selon une caractéristique particulière, les câbles comprennent chacun une première partie liée à la batterie et qui est orientée sensiblement parallèlement audit axe de révolution de la batterie, et une deuxième partie liée au connecteur femelle et qui est orientée sensiblement perpendiculairement audit axe de révolution de ladite batterie.

Une telle disposition des câbles permet de minimiser le volume du dispositif d'alimentation électrique portable selon la technique proposée. Cela permet également de prendre en compte les positions relatives du connecteur femelle et de la batterie.

Un autre aspect concerne le connecteur femelle du dispositif d'alimentation électrique portable qui peut avantageusement être un connecteur à verrouillage.

Cela permet de sécuriser la connexion entre le dispositif d'alimentation électrique portable et l'appareil électronique, ainsi que d'assurer le maintien de l'alimentation en cas de choc ou de mauvaise manipulation de l'appareil électronique.

La technique proposée se rapporte à une méthode de connexion du dispositif d'alimentation électrique portable tel que proposé à un connecteur d'alimentation mâle d'un appareil électronique tel qu'un terminal de paiement.

Selon la technique proposée, une telle méthode met en oeuvre les étapes suivantes :
- mouvement de rotation et/ou de translation de ladite batterie, de façon à simultanément aligner ladite batterie avec son logement de réception et aligner ledit connecteur femelle avec les fiches de connexion dudit connecteur d'alimentation mâle dudit appareil électronique ;
- mouvement de translation de ladite batterie de façon à simultanément insérer ladite batterie dans son logement de réception et enficher ledit connecteur femelle dans ledit connecteur d'alimentation mâle dudit appareil électronique.

Une telle méthode permet notamment de connecter d'une seule main le dispositif d'alimentation électrique portable tel que proposé à un appareil électronique tel qu'un terminal de paiement. De plus, la cinématique de connexion est grandement simplifiée par rapport à l'art antérieur puisque seuls deux mouvements suffisent généralement à n'importe quel utilisateur pour effectuer la connexion.

La technique proposée se rapporte à une méthode de déconnexion d'un dispositif d'alimentation électrique portable tel que proposé à un connecteur d'alimentation mâle d'un appareil électronique tel qu'un terminal de paiement.

Selon la technique proposée, une telle méthode met en oeuvre les étapes suivantes :
- mouvement de rotation de ladite batterie à l'intérieur de son logement de réception jusqu'à la déconnexion (désenfichage) dudit connecteur femelle par rapport audit connecteur d'alimentation mâle dudit appareil électronique ;
- mouvement de translation de ladite batterie de façon à l'extraire de son logement de réception.

Une telle méthode permet notamment de déconnecter d'une seule main le dispositif d'alimentation électrique portable tel que proposé d'un appareil électronique tel qu'un terminal de paiement. De plus, la cinématique de déconnexion est grandement simplifiée par rapport à l'art antérieur puisque seuls deux mouvements suffisent généralement à n'importe quel utilisateur pour effectuer la déconnexion.

### 4. Liste des figures

D'autres buts, caractéristiques et avantages de la technique proposée apparaîtront plus clairement à la lecture de la description suivante, donnée à titre de simple exemple illustratif, et non limitatif, en relation avec les figures, parmi lesquelles :
- la figure 1 illustre un dispositif d'alimentation électrique portable selon l'art antérieur;
- la figure 2 présente une première vue en perspective d'un dispositif d'alimentation électrique portable selon la technique proposée;
- la figure 3 présente une deuxième vue en perspective du dispositif d'alimentation électrique selon la technique proposée;
- la figure 4 présente une vue en transparence du dispositif d'alimentation électrique portable selon la technique proposée;
- la figure 5 présente une vue en transparence du dispositif d'alimentation électrique de la figure 4 selon une autre orientation;
- la figure 6 présente une vue en perspective du dispositif d'alimentation électrique portable tel que proposé avant son insertion dans le connecteur d'alimentation mâle d'un terminal de paiement électronique;
- la figure 7 présente une vue en coupe de la figure 6;
- la figure 8 présente une vue en coupe du dispositif d'alimentation électrique portable tel que proposé après son insertion dans le connecteur d'alimentation d'un terminal de paiement électronique.

### 5. Description détaillée de modes de réalisation

Le principe général de la technique proposée repose sur un dispositif d'alimentation électrique portable, comprenant une batterie, des câbles et un connecteur femelle, sur lequel est fixé un capot visant à solidariser le connecteur à la batterie. Ce capot permet de solidariser notamment le connecteur femelle et la batterie en tant que telle. Dès lors, on obtient un ensemble compact, cohérent et rigide. Il n'est ainsi pas nécessaire de prévoir des manipulations séparées pour insérer le connecteur femelle dans le connecteur mâle et pour insérer la batterie dans son logement. Par ailleurs, dans au moins certains modes de réalisation, le capot rigide est conformé pour ne pas mobiliser un volume supérieur à celui de la batterie sans capot. Dès lors, selon au moins un mode de réalisation, il est possible d'utiliser aussi bien les batteries usuelles (sans capot et sans solidarisation) que les batteries avec capot, plus pratiques et plus simples à mettre en oeuvre. Plus particulièrement, pour le capot rigide, on peut choisir un matériau dont la rigidité peut être assurée à l'aide d'une épaisseur relativement faible de matière.

Un tel dispositif d'alimentation électrique portable est compact et rigide, et permet de se connecter à un appareil électronique existant, tel qu'un terminal de paiement, à l'aide d'une seule main et avec des mouvements simplifiés par rapport aux solutions de l'art antérieur. Un tel dispositif d'alimentation électrique portable est généralement utilisé comme source d'alimentation pour des appareils électroniques tels que des terminaux de paiement.

Selon la technique proposée, ce dispositif d'alimentation électrique portable peut être facilement connecté et déconnecté du connecteur d'alimentation d'un appareil électronique, et notamment d'un terminal de paiement, par n'importe quel utilisateur, quelle que soit sa dextérité et la taille de ses doigts.

Ce dispositif d'alimentation électrique portable peut être inséré et retiré d'un appareil électronique, et notamment un terminal de paiement, à l'aide d'une seule main et quelques mouvements simples.

Ce dispositif d'alimentation électrique portable pouvant être inséré de façon sécurisée à un appareil électronique, et notamment à un terminal de paiement, sans risques de dommages pour l'utilisateur ou pour l'appareil électronique.

Dans un mode de réalisation spécifique de la technique proposée, le capot rigide renferme directement le connecteur femelle et les câbles de connexion à la batterie. Dès lors, dans ce mode de réalisation, il n'est pas nécessaire de disposer de plusieurs pièces à assembler. Un tel mode de réalisation peut se révéler utile par exemple lorsque l'on dispose d'une maitrise de la chaine de fabrication des connecteurs femelles ou encore lorsque l'on souhaite disposer, au sein du dispositif d'alimentation électrique portable, d'un circuit électronique complémentaire pouvant être utilisé pour suivre l'état de fonctionnement de la batterie (voltage, ampérage, nombre de charges, charge courante, etc.) sans avoir besoin d'implémenter ces fonctions au sein du terminal récepteur. Dès lors, le coût du terminal récepteur est moindre.

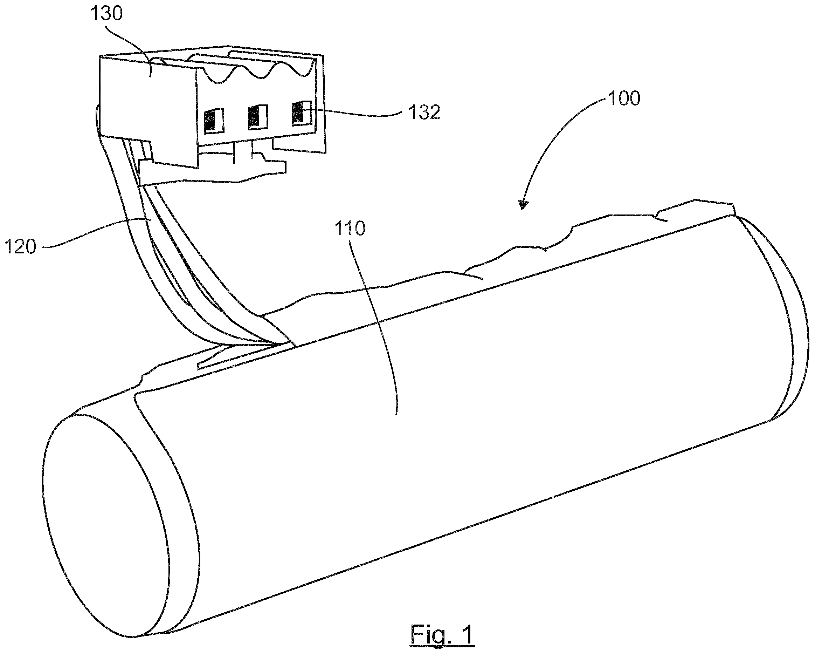

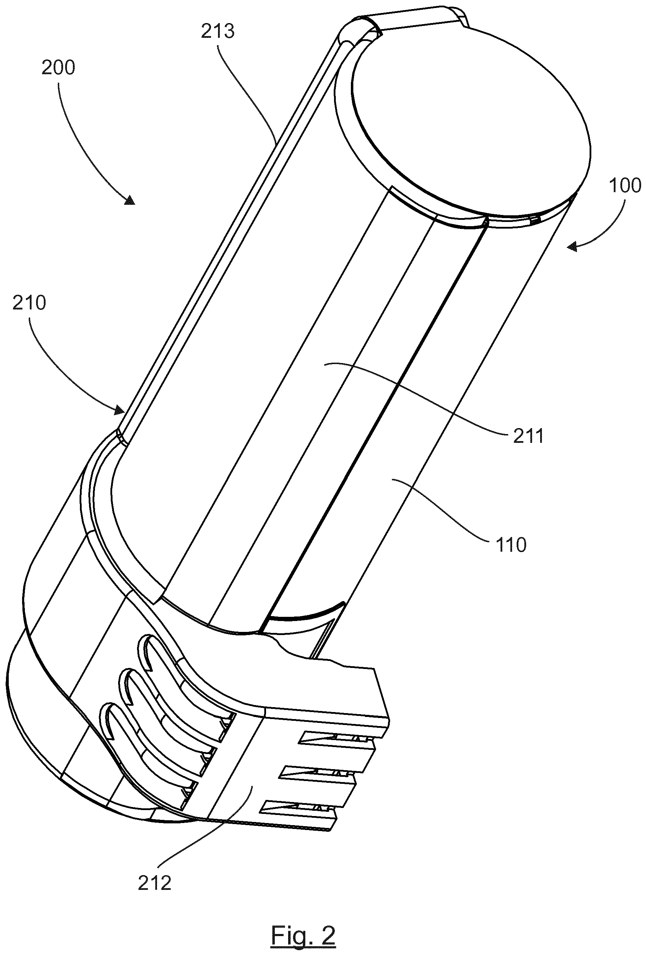

On présente, en relation avec les figures 1 à 8, un exemple de réalisation d'un tel dispositif d'alimentation électrique portable. Pour ce faire, on se réfère à un dispositif d'alimentation électrique portable de l'art antérieur, présenté en relation avec la figure 1. Les figures 2 à 8 illustrent les différentes caractéristiques du dispositif d'alimentation électrique portable de la technique proposée.

La figure 1 illustre un dispositif d'alimentation électrique portable de l'art antérieur 100 comprenant une batterie 110 reliée à un connecteur femelle 130 par l'intermédiaire de câbles 120. Des orifices 131, 132 s'étendent de part et d'autre du connecteur 130 dans le sens de sa longueur, de façon à pouvoir y insérer des câbles 120 en entrée et des fiches de connexion d'un connecteur d'alimentation mâle en sortie. Ces orifices 131, 132 abritent également des contacts électriques de façon à pouvoir établir des connexions électriques en entrée et en sortie du connecteur 130. Ces contacts électriques peuvent notamment prendre la forme d'une lame à ressort ou d'une plaque.

La figure 2 présente une première vue en perspective d'un dispositif d'alimentation électrique portable tel que proposé 200, où un capot 210 vient se fixer sur le dispositif d'alimentation électrique portable de l'art antérieur 100. Ainsi, une première partie du capot 211 est solidarisée à la batterie 110, une deuxième partie du capot 212 est fixée sur le connecteur 130 et une troisième partie du capot 213 sert à loger et maintenir les câbles 120.

On voit ainsi sur cette figure 2 que les éléments constituant le dispositif d'alimentation électrique portable de l'art antérieur 100 sont intégralement recouverts par le capot 210, à l'exception de la batterie 110 qui n'est que partiellement recouverte. Bien entendu, dans une variante, la batterie 110 est entièrement recouverte par la première partie du capot 211.

Les première et deuxième parties 211 et 212 du capot 210 sont respectivement de forme sensiblement complémentaire à celle de la batterie 110 et du connecteur 130. Un logement de réception des câbles 213 permet également de maintenir les câbles 120. Le capot 210 permet donc d'accueillir parfaitement les éléments constitutifs (110, 120, 130) du dispositif d'alimentation électrique portable de l'art antérieur 100. La forme du capot 210 est donc telle qu'il n'interfère pas avec les composants internes des appareils électriques existants. Le dispositif d'alimentation électrique portable tel que proposé 200 est ainsi compatible avec les appareils électriques existants. De plus, le volume du capot 210, et donc du dispositif d'alimentation électrique 200, est ainsi minimisé.

Par ailleurs, les première, deuxième et troisième parties (211, 212, 213) faisant partie du même capot 210, le dispositif d'alimentation électrique portable tel que proposé 200 forme alors un seul bloc indéformable. Autrement dit, le connecteur 130 est ainsi rigidement lié à la batterie 110 par l'intermédiaire du capot 210.

Avantageusement, le connecteur 130 peut être un connecteur à verrouillage, permettant ainsi de sécuriser la connexion entre les connecteurs mâle et femelle par l'intermédiaire de moyens de verrouillage.

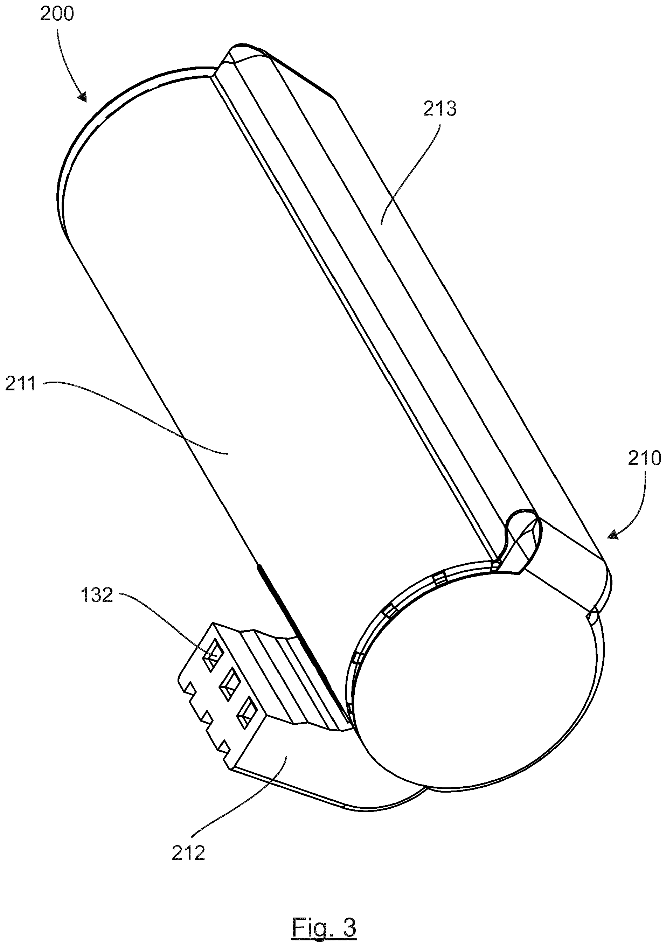

La figure 3 présente le dispositif d'alimentation électrique portable 200 de la figure 2 sous un autre angle de vue, qui permet notamment d'illustrer les orifices de sortie 132 du connecteur 130. Ainsi, les orifices 132 illustrés sur la figure 3 sont positionnés en sortie du connecteur 130 et servent à accueillir les fiches de connexion d'un connecteur d'alimentation mâle. Des contacts électriques placés à l'intérieur de ces orifices 132 permettent d'établir une connexion électrique entre le connecteur 130 et les fiches de connexion d'un connecteur d'alimentation mâle. Des orifices d'entrée 131 sont également situés en entrée du connecteur 130, dans lesquels des contacts électriques permettent d'assurer la connexion entre les câbles 120 et le connecteur 130.

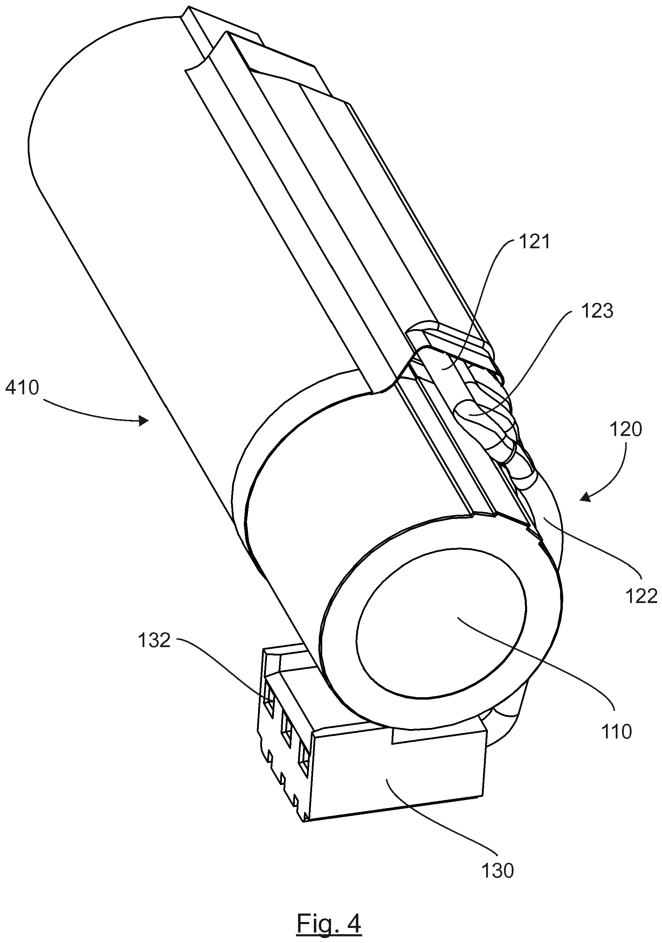

La figure 4 présente une vue en transparence du dispositif d'alimentation électrique portable 200 comprenant le dispositif d'alimentation électrique portable de l'art antérieur 100 et un capot partiel 410. Ainsi, sur cette figure 4, certaines portions du capot 210 ont été retirées afin d'illustrer l'agencement des câbles 120 et du connecteur 130 par rapport à la batterie 110 lors de la fixation du capot 210 sur le dispositif d'alimentation électrique de l'art antérieur 100.

Le connecteur 130 et les câbles 120 sont ainsi sensiblement tangents à la surface latérale de la batterie 110, qui est de forme sensiblement cylindrique. Les câbles 120 comprennent une première partie 121 dont l'extrémité libre est connectée à la batterie 110, et une seconde partie 122 dont l'extrémité libre est reliée au connecteur 130. La première partie 121 des câbles 120 s'étend parallèlement à l'axe de révolution de la batterie, soit dans le sens de sa longueur, tandis que la deuxième partie 122 des câbles 120 s'étend perpendiculairement à l'axe de révolution de la batterie, le long de sa circonférence. Les parties 121 et 122 des câbles 120 se rejoignent alors en une partie coudée 123 et forment entre elles un angle sensiblement égal à 90°.

Par ailleurs, les orifices d'entrée et de sortie 131, 132 du connecteur 130 s'étendent perpendiculairement à l'axe de révolution de la batterie 110.

Ainsi, les orifices d'entrée 131 du connecteur femelle 130 peuvent recevoir l'extrémité libre de la deuxième partie 122 des câbles 120. Des contacts électriques permettent alors une connexion électrique entre les câbles 120 et le connecteur 130.

Les orifices de sortie 132 du connecteur femelle 130 sont orientés de façon à pouvoir s'enficher dans les fiches de connexion d'un connecteur d'alimentation mâle par un mouvement de rotation de la batterie 110 après qu'elle soit insérée dans un logement de réception pour batterie d'un appareil électronique. En effet, de tels logements de réception pour batterie d'appareils électroniques existants tels que des terminaux de paiement permettent généralement une telle rotation de la batterie 110 après son insertion dans le logement. La disposition du connecteur 130 et de ses orifices de sortie 132, tangents à la surface latérale de la batterie et perpendiculaires à son axe de révolution, permet alors leur insertion ou retrait du connecteur d'alimentation mâle d'un appareil électronique existant lors du mouvement de rotation de la batterie 110.

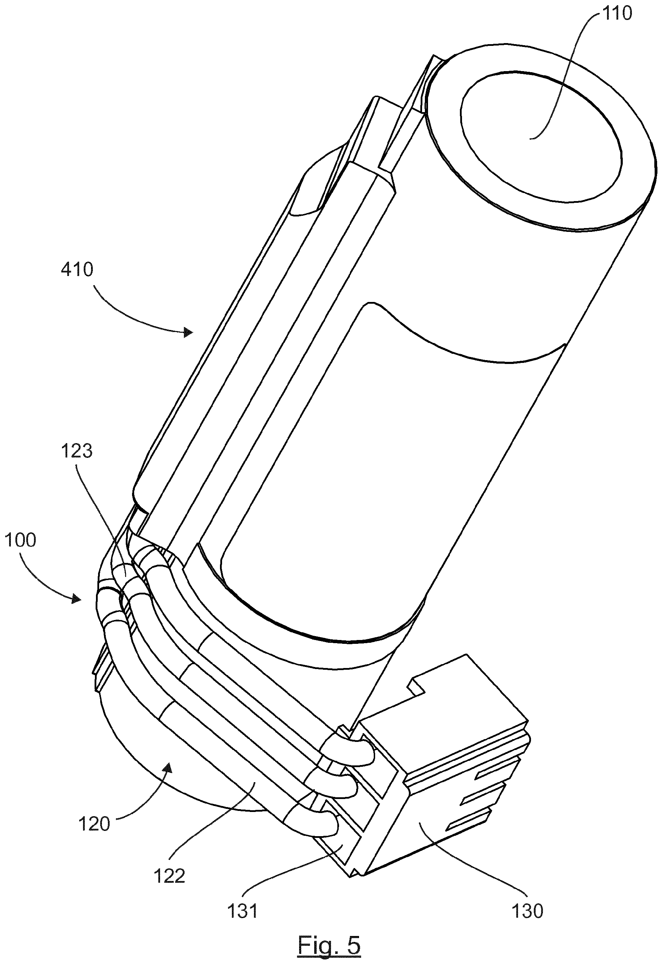

La figure 5 présente une seconde vue en transparence du dispositif d'alimentation électrique portable 200 selon une orientation différente de celle de la figure 4. Cette figure 5 illustre donc à nouveau le dispositif d'alimentation électrique portable de l'art antérieur 100 ainsi qu'un capot partiel 410. La partie 122 des câbles 120 s'étend perpendiculairement à l'axe de révolution de la batterie 110, entre les orifices d'entrée 131 du connecteur 130 et la partie coudée 123 des câbles 120.

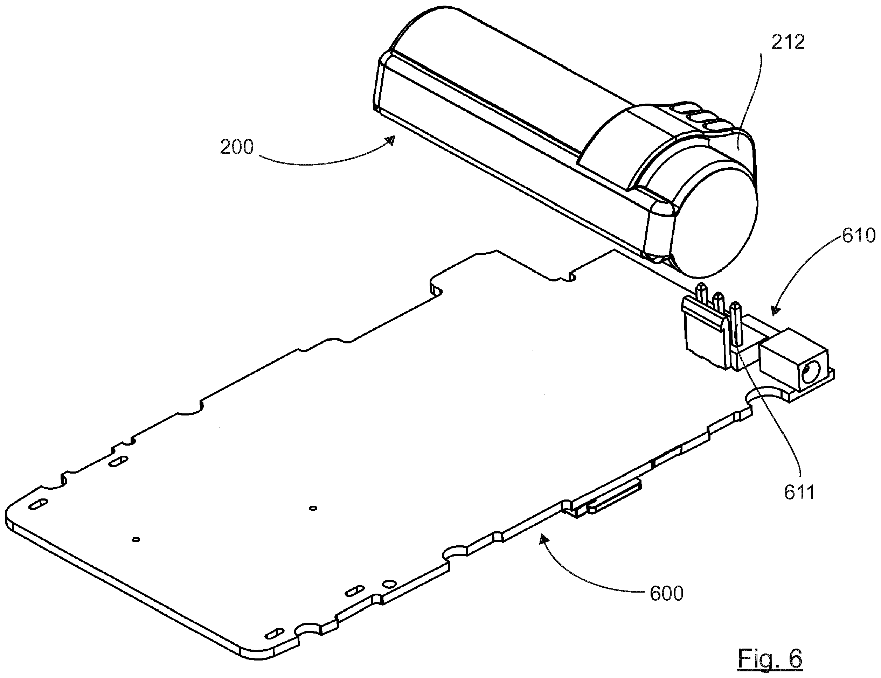

La figure 6 illustre en perspective le dispositif d'alimentation électrique portable tel que proposé 200 avant son insertion dans les trois fiches de connexion 611 du connecteur d'alimentation mâle 610 qui est relié à la carte mère 600 d'un terminal de paiement électronique. La deuxième partie 212 du capot 210 est correctement orientée de façon à ce qu'elle puisse être enfichée dans le connecteur d'alimentation mâle 610 par un unique mouvement de translation ou de rotation (en fonction de la mise en oeuvre).

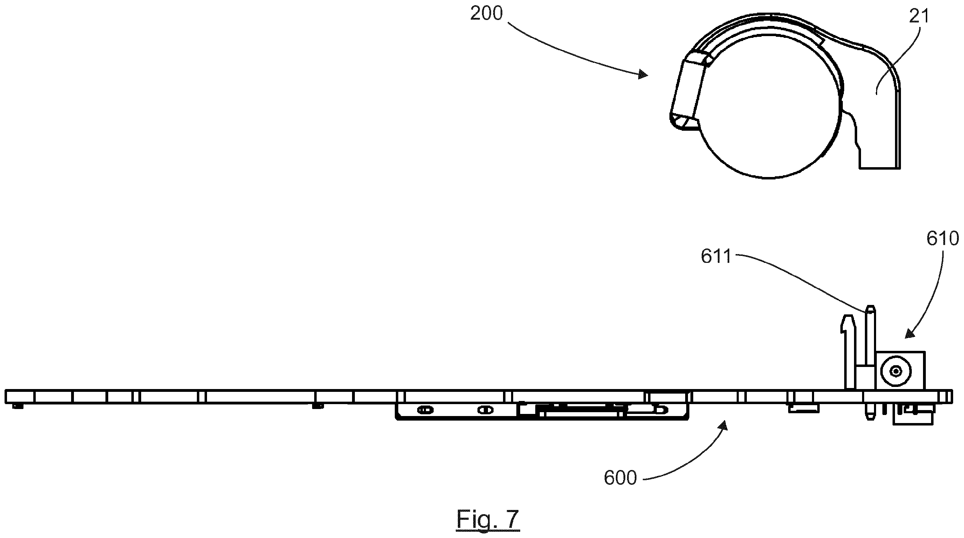

La figure 7 présente une vue en coupe de la figure 6. À nouveau, le dispositif d'alimentation électrique portable 200 est correctement orienté par rapport au connecteur d'alimentation mâle 610, si bien qu'un unique mouvement de translation (ou de rotation) permet de connecter le dispositif d'alimentation 200 à la carte mère 600 via les connecteurs mâle et femelle 610, 130. Une fois la connexion électrique établie entre le dispositif d'alimentation électrique 200 et la carte mère 600, la carte mère 600 est alimentée en énergie électrique et l'appareil électronique peut être mis sous tension.

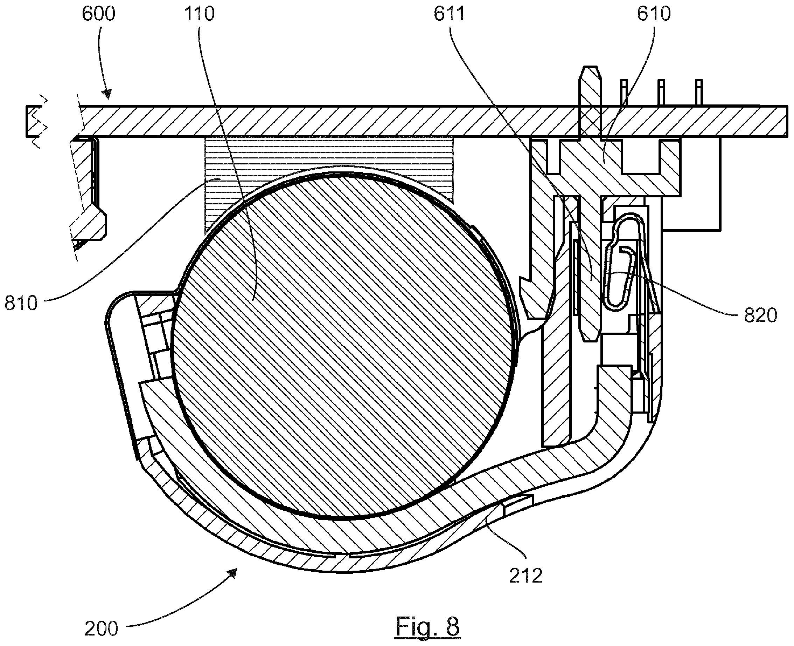

La figure 8 présente une vue en coupe du dispositif d'alimentation électrique portable tel que proposé 200 après insertion du connecteur femelle 130 dans le connecteur mâle d'alimentation 610. La batterie 110 est ainsi insérée dans son logement de réception 810, qui consiste essentiellement en un compartiment ouvert de forme complémentaire à celle de la batterie 110. La batterie 110 peut donc éventuellement être entraînée en rotation après son insertion dans le logement de réception 810. La lame à ressort 820 du connecteur femelle 130 est alors en contact avec la fiche de connexion 611 du connecteur d'alimentation mâle 610. Le dispositif d'alimentation électrique portable 200 peut alors alimenter la carte mère 600 en énergie électrique afin de permettre la mise sous tension du terminal de paiement électronique.

Le dispositif d'alimentation électrique portable 200 tel que proposé est donc un dispositif d'alimentation électrique portable, compact et rigide servant à améliorer la cinématique de connexion et de déconnexion à un appareil électronique tel qu'un terminal de paiement.

Ainsi, les opérations de connexion et la déconnexion du dispositif d'alimentation électrique portable 200 peuvent s'effectuer d'une seule main selon une cinématique grandement simplifiée par rapport à l'art antérieur. En effet, d'après la technique proposée, seuls un ou deux mouvements simples sont requis pour effectuer ces opérations de connexion et déconnexion.

Pour la connexion du dispositif d'alimentation électrique portable à l'appareil électronique, l'utilisateur tiendra préférablement le dispositif d'alimentation électrique portable d'une seule main au niveau de la batterie 110 ou de la première partie 211 du capot 210. Avec un premier mouvement de rotation et/ou de translation, l'utilisateur approchera la batterie 110 du logement de réception 810 tout en alignant le connecteur femelle 130 avec le connecteur d'alimentation mâle 610. Puis, grâce à un mouvement de translation, l'utilisateur logera la batterie dans son logement de réception 810 et enfichera simultanément les fiches de connexion 611 du connecteur d'alimentation mâle 610 dans le connecteur femelle 130.

Pour la déconnexion du dispositif d'alimentation électrique portable de l'appareil électronique, l'utilisateur tiendra préférablement le dispositif d'alimentation électrique portable d'une seule main au niveau de la batterie 110 ou de la première partie 211 du capot 210. Avec un premier mouvement de rotation, l'utilisateur déconnecte le connecteur femelle 130 du connecteur d'alimentation mâle 610. Puis, grâce à un mouvement de translation, l'utilisateur retire le dispositif d'alimentation électrique portable 200 de son logement de réception 810 de façon à pouvoir l'extraire de l'appareil électronique.

Par ailleurs, le dispositif d'alimentation électrique portable tel que proposé 200 est généralement compatible avec les appareils électroniques utilisant les dispositifs d'alimentation électrique portables 100 de l'art antérieur de même type de l'art antérieur. En effet, la batterie 110 n'est recouverte que partiellement par le capot 210 dans un des modes de réalisation de la technique proposée, de sorte qu'elle puisse s'insérer facilement dans les logements de réception pour batterie existants. De plus, la complémentarité des parties 211, 212 et 213 du capot 210 avec les éléments 110, 120 et 130 des dispositifs d'alimentation électrique de l'art antérieur 100 permet d'assurer la rétrocompatibilité du dispositif tel que proposé 200 avec les appareils électroniques existants. En effet, la forme du capot 210 est ainsi adaptée de façon à ce qu'elle n'interfère pas avec les éléments internes constituant les appareils électroniques, et notamment les terminaux de paiement.

## Revendications

1. Dispositif d'alimentation électrique portable (200) pour appareil électronique comprenant une batterie (110) reliée à au moins deux câbles (120), eux-mêmes reliés à au moins deux contacts électriques situés dans un connecteur (130), dit connecteur femelle (130), **caractérisé en ce que** ledit dispositif d'alimentation électrique portable (200) comprend en outre un capot (210) solidarisé à ladite batterie (110) et liant rigidement ledit connecteur femelle (130) à ladite batterie (110), ladite batterie étant un solide de révolution, lesdits câbles (120) et ledit connecteur femelle (130) étant sensiblement tangents à une surface de ladite batterie (110), les orifices (131, 132) dudit connecteur femelle (130) s'étendant sensiblement perpendiculairement à l'axe de révolution de ladite batterie (110), ledit capot (210) étant conformé pour ne pas mobiliser un volume supérieur à ladite batterie.

2. Dispositif d'alimentation électrique portable (200) selon la revendication 1, **caractérisé en ce que** ledit capot (210) comprend une première partie (211) de forme sensiblement complémentaire à la forme de ladite batterie (110), et une deuxième partie (212) de forme sensiblement complémentaire à la forme dudit connecteur femelle (130).

3. Dispositif d'alimentation électrique portable selon la revendication 2, **caractérisé en ce que** ledit capot (210) comprend une troisième partie (213) définissant un logement de réception pour le maintien desdits au moins deux câbles (120).

4. Dispositif d'alimentation électrique portable selon l'une quelconque des revendications 2 et 3, **caractérisé en ce que** ladite première partie (211) dudit capot (210) recouvre partiellement ladite batterie (110).

5. Dispositif d'alimentation électrique portable selon l'une quelconque des revendications 1 à 4, **caractérisé en ce que** lesdits au moins deux câbles (120) comprennent chacun une première partie (121) liée à ladite batterie et qui est orientée sensiblement parallèlement audit axe de révolution de ladite batterie (110), et une deuxième partie (122) liée audit connecteur femelle et qui est orientée sensiblement perpendiculairement audit axe de révolution de ladite batterie (110).

6. Dispositif d'alimentation électrique portable selon l'une quelconque des revendications 1 à 5, **caractérisé en ce que** ledit connecteur femelle (130) est un connecteur à verrouillage.

7. Méthode de connexion d'un dispositif d'alimentation électrique portable (200) selon l'une quelconque des revendications 1 à 6, ledit dispositif d'alimentation électrique portable (200) pouvant être connecté à un connecteur d'alimentation mâle (610) d'un appareil électronique comprenant un logement de réception pour batterie (810), **caractérisé en ce qu'**elle met en oeuvre les étapes suivantes :
- mouvement de rotation et/ou de translation dudit dispositif d'alimentation électrique portable, de façon à simultanément aligner ladite batterie (110) avec ledit logement de réception pour batterie (810) et aligner ledit connecteur femelle (130) avec les fiches de connexion (611) dudit connecteur d'alimentation mâle (610) ;
- mouvement de translation dudit dispositif d'alimentation électrique portable de façon à simultanément insérer ladite batterie (110) dans ledit logement de réception pour batterie (810) et enficher ledit connecteur femelle (130) dans ledit connecteur d'alimentation mâle (610).

8. Méthode de déconnexion d'un dispositif d'alimentation électrique portable (200) selon l'une quelconque des revendications 1 à 6, ledit dispositif d'alimentation électrique portable (200) pouvant être déconnecté d'un connecteur d'alimentation mâle (610) d'un appareil électronique comprenant un logement de réception pour batterie (810), **caractérisé en ce qu'**elle met en oeuvre les étapes suivantes :
- mouvement de rotation dudit dispositif d'alimentation électrique portable à l'intérieur dudit logement de réception pour batterie (810) jusqu'à une déconnexion dudit connecteur femelle (130) par rapport audit connecteur d'alimentation mâle (610) ;
- mouvement de translation dudit dispositif d'alimentation électrique portable de façon à l'extraire dudit logement de réception pour batterie (810).

## Patentansprüche

1. Tragbare Vorrichtung zur elektrischen Stromversorgung (200) für ein elektronisches Gerät, umfassend eine Batterie (110), die mit mindestens zwei Kabeln (120) verbunden ist, die ihrerseits mit mindestens zwei elektrischen Kontakten verbunden sind, die sich in einem Verbinder(130) befinden, der Buchsenverbinder (130) genannt wird, **dadurch gekennzeichnet, dass** die tragbare Vorrichtung zur elektrischen Stromversorgung (200) ferner eine Abdeckung (210) aufweist, die mit der Batterie (110) fest verbunden ist und den Buchsenverbinder (130) starr an der Batterie (110) befestigt, wobei die Batterie ein Rotationskörper ist, wobei die Kabel (120) und der Buchsenverbinder (130) im Wesentlichen tangential zu einer Oberfläche der Batterie (110) sind, wobei sich die Öffnungen (131, 132) des Buchsenverbinders (130) im Wesentlichen senkrecht zu der Drehachse der Batterie (110) erstrecken, wobei die Abdeckung (210) ausgeformt ist, um kein Volumen zu mobilisieren, das größer ist als die Batterie ist.

2. Tragbare Vorrichtung zur elektrischen Stromversorgung (200) nach Anspruch 1, **dadurch gekennzeichnet, dass** die Abdeckung (210) einen ersten Teil (211) mit einer Form, die im Wesentlichen komplementär zur Form der Batterie (110) ist, und einen zweiten Teil (212) mit einer Form, die im Wesentlichen komplementär zur Form des Buchsenverbinders (130) ist, aufweist.

3. Tragbare Vorrichtung zur elektrischen Stromversorgung nach Anspruch 2, **dadurch gekennzeichnet, dass** die Abdeckung (210) einen dritten Teil (213) aufweist, der ein Aufnahmegehäuse zum Halten der mindestens zwei Kabel (120) definiert.

4. Tragbare Vorrichtung zur elektrischen Stromversorgung nach einem der Ansprüche 2 und 3, **dadurch gekennzeichnet, dass** der erste Teil (211) der Abdeckung (210) die Batterie (110) teilweise bedeckt.

5. Tragbare Vorrichtung zur elektrischen Stromversorgung nach einem der Ansprüche 1 bis 4, **dadurch gekennzeichnet, dass** die mindestens zwei Kabel (120) jeweils einen ersten Teil (121), der mit der Batterie verbunden ist und der im Wesentlichen parallel zu der Drehachse der Batterie (110) ausgerichtet ist, und einen zweiten Teil (122) aufweisen, der mit dem Buchsenverbinder verbunden ist und der im Wesentlichen senkrecht zu der Drehachse der Batterie (110) ausgerichtet ist.

6. Tragbare Vorrichtung zur elektrischen Stromversorgung nach einem der Ansprüche 1 bis 5, **dadurch gekennzeichnet, dass** der Buchsenverbinder (130) ein Verriegelungsverbinder ist.

7. Verfahren zum Anschließen einer tragbaren Vorrichtung zur elektrischen Stromversorgung (200) nach einem der Ansprüche 1 bis 6, wobei die tragbare Vorrichtung zur elektrischen Stromversorgung (200) mit einem Stromversorgungssteckverbinder (610) eines elektronischen Gerätes verbunden werden kann, das ein Batterieaufnahmegehäuse (810) aufweist, **dadurch gekennzeichnet, dass** es die folgenden Schritte umsetzt:
- drehendes und/oder translatorisches Bewegen der tragbaren Vorrichtung zur elektrischen Stromversorgung derart, um die Batterie (110) gleichzeitig mit dem Batterieaufnahmegehäuse (810) auszurichten und den Buchsenverbinder (130) mit den Verbindungssteckern (611) des Stromversorgungssteckverbinders (610) auszurichten,
- translatorisches Bewegen der tragbaren Vorrichtung zur elektrischen Stromversorgung derart, um die Batterie (110) gleichzeitig in das Batterieaufnahmegehäuse (810) einzufügen und den Buchsenverbinder (130) in den Stromversorgungssteckverbinder (610) einzustecken.

8. Verfahren zum Abtrennen einer tragbaren Vorrichtung zur elektrischen Stromversorgung (200) nach einem der Ansprüche 1 bis 6, wobei die tragbare Vorrichtung zur elektrischen Stromversorgung (200) von einem Stromversorgungssteckverbinder (610) eines elektronischen Gerätes abgetrennt werden kann, das ein Batterieaufnahmegehäuse (810) aufweist, **dadurch gekennzeichnet, dass** es die folgenden Schritte umsetzt:
- drehendes Bewegen der tragbaren Vorrichtung zur elektrischen Stromversorgung im Inneren des Batterieaufnahmegehäuses (810) bis zum Abtrennen des Buchsenverbinders (130) gegenüber von dem Stromversorgungssteckverbinder (610),
- translatorisches Bewegen der tragbaren Vorrichtung zur elektrischen Stromversorgung derart, um sie aus dem Batterieaufnahmegehäuse (810) herauszuziehen.

## Claims

1. Portable electrical power supply device (200) for electronic apparatus comprising a battery (110) connected to at least two cables (120), themselves connected to at least two electrical contacts situated in a connector (130), called a female connector (130), **characterized in that** said portable electrical power supply device (200) furthermore comprises a cover (210) attached to the battery (110) and rigidly binding said female connector (130) to said battery (110), said battery being a solid of revolution, said cables (120) and said female connector (130) being substantially tangential to a surface of said battery (110), the holes (131, 132) of said female connector (130) extending substantially perpendicularly to the axis of revolution of said battery (110), said cover (210) being shaped so that it does not mobilize a volume greater than said battery.

2. Portable electrical power supply device (200) according to claim 1, **characterized in that** said cover (210) comprises a first part (211) having a shape that is substantially complementary to the shape of said battery (110) and a second part (212) having a shape that is substantially complementary to the shape of said female connector (130).

3. Portable electrical power supply device according to claim 2, **characterized in that** said cover (210) comprises a third part (213) defining a reception housing for holding said at least two cables (120).

4. Portable electrical power supply device according to any one of the claims 2 and 3, **characterized in that** said first part (211) of said cover partially covers said battery (110).

5. Portable electrical power supply device according to any one of the claims 1 to 4, **characterized in that** said at least two cables (120) each comprise a first part (121) that is connected to said battery and is oriented substantially in parallel to said axis of revolution of said battery (110), and a second part (122) that is connected to said female connector and is oriented so as to be substantially perpendicular to said axis of revolution of said battery (110).

6. Portable electrical power supply device according to any one of the claims 1 to 5, **characterized in that** said female connector (130) is a locking connector.

7. Method for connecting a portable electrical power supply device (200) according to any one of the claims 1 to 6, said portable electrical power supply device (200) being connectable to a male power supply connector (610) of an electronic apparatus comprising a reception housing (810) for battery, **characterized in that** it implements the following steps:
- motion of rotation and/or translation of said portable electrical power supply device, so as to simultaneously align said battery (110) with said reception housing for battery (810) and align said female connector (130) with the connection plugs (611) of said male power supply connector (610);
- motion of translation of said portable electrical power supply device so as to simultaneously insert said battery (110) into said reception housing for battery (810) and plug said female connector (130) into said male power supply connector (610).

8. Method for disconnecting a portable electrical power supply device (200) according to any one of the claims 1 to 6, said portable electrical power supply device (200) being disconnectable from a male power supply connector (610) of an electronic apparatus comprising a reception housing (810) for battery, **characterized in that** it implements the following steps:
- motion of rotation of said portable electrical power supply device within said reception housing (810) for battery until disconnection of said female connector (130) from said male power supply connector (610) ;
- motion of translation of said portable electrical power supply device so as to extract it from said reception housing (810) for battery.
